## Europäisches Patentamt
## European Patent Office
## Office européen des brevets

(11) Numéro de publication: **0 190 531**
A1

# DEMANDE DE BREVET EUROPEEN

(21) Numéro de dépôt: **85420243.9**

(22) Date de dépôt: **24.12.85**

(51) Int. Cl.⁴: **B 65 G 47/51**

(30) Priorité: **09.01.85 FR 8500538**

(43) Date de publication de la demande:
**13.08.86 Bulletin 86/33**

(84) Etats contractants désignés:
**AT BE CH DE GB IT LI LU NL SE**

(71) Demandeur: **SOCIETE FRANCAISE D'ALLUMAGE**
**42, rue Legendre**
**F-75017 Paris(FR)**

(72) Inventeur: **Guet, Jean-Claude**
**"Le Bel Air" Valencin**
**F-38540 Heyrieux(FR)**

(74) Mandataire: **Maureau, Pierre et al,**
**Cabinet GERMAIN & MAUREAU B.P. 3011**
**F-69392 Lyon Cedex 03(FR)**

(54) **Procédé et dispositif pour le stockage, le transfert et la distribution d'objets.**

(57) Ce procédé consiste, pour leur stockage, à emmagasiner les objets (22) disposés côte à côte, entre les spires d'un film ou ruban (12) de matière souple, au fur et à mesure de son enroulement sur une bobine de stockage (2) et, pour leur redistribution, à les extraire d'entre les spires de ce film (12), en le déroulant de cette bobine.

EP 0 190 531 A1

./...

FIG.1

1

## "Procédé et dispositif pour le stockage, le transfert et la distribution d'objets"

La présente invention concerne un procédé et un dispositif pour le stockage, le transfert et la distribution d'objets, c'est-à-dire, plus précisément, un procédé et un dispositif permettant de stocker, à la sortie d'un poste de fabrication, des objets en cours de fabrication, de les transférer et de les redistribuer à un ou plusieurs autres postes où leur fabrication sera poursuivie ou achevée.

Actuellement, on utilise des bacs dans lesquels les objets sont reçus en vrac à la sortie des postes de fabrication et transférés à d'autres postes. Cette manière d'opérer présente les inconvénients suivants :

- les objets ne sont pas protégés de la poussière et autres agents corrosifs ;

- ils se rayent par abrasion en raison de leurs frottements mutuels ;

- la manutention est généralement manuelle ce qui limite le poids, le volume et le nombre d'objets transférés ;

- l'orientation des objets n'est pas conservée ce qui impose une redistribution soit manuelle et par conséquent d'un coût élevé et d'une cadence réduite, soit par bol vibrant ce qui augmente les risques de rayures et n'autorise pas des cadences plus élevées.

La présente invention vise à remédier à tous ces inconvénients. A cet effet, le procédé qu'elle concerne consiste, pour leur stockage, à emmagasiner les objets, disposés côte à côte, entre les spires d'un film ou ruban de matière souple, au fur et à mesure de son enroulement sur une bobine de stockage et, pour leur redistribution, à les extraire d'entre les spires de ce film, en le déroulant de cette bobine.

Ainsi, les flasques de la bobine constituant les parois de leur conditionnement provisoire, les objets tenus serrés, côte à côte, entre les spires du film sont parfaitement protégés contre les poussières et contre tout frottement risquant de les rayer.

En outre, le rangement ordonné des objets permet non seulement de les stocker sous un volume beaucoup plus réduit, ce qui autorise un plus grand nombre d'objets par unité de stockage, mais aussi de conserver leur orientation, ce qui facilite considérablement leur redistribution au poste suivant et autorise des cadences bien supérieures à celles des procédés connus manuels ou par bols vibrants.

2

Le dispositif pour la mise en oeuvre de ce procédé comprend, essentiellement, au moins une bobine de stockage d'axe de rotation horizontal et à laquelle sont associés des moyens d'entraînement en rotation dans les deux sens, c'est-à-dire pour le fonctionnement dans le sens de l'emmagasinage aussi bien que pour celui dans le sens de la distribution, et des moyens de freinage, l'écartement des flasques de cette bobine correspondant sensiblement à la longueur des objets à stocker, au moins une bobine de stockage du film à laquelle sont associés des moyens de freinage pour le fonctionnement dans le sens de l'emmagasinage et des moyens d'entraînement en rotation dans le sens d'appel du film pour le fonctionnement dans le sens de la distribution, un tapis transporteur d'entrée des objets à stocker ou de sortie des objets à distribuer, au moins un tapis d'accumulation orienté perpendiculairement au tapis d'entrée ou de sortie des objets, un tapis oscillant disposé dans le prolongement de chaque tapis d'accumulation, monté oscillant autour de son extrémité située du côté du tapis d'accumulation et auquel sont associés des moyens tendant à maintenir élastiquement son autre extrémité en appui tangentiel contre la spire de plus grand diamètre formée dans la bobine de stockage juste en amont de la zone d'appui tangentiel du film contre ladite dernière spire, des moyens étant prévus pour, lorsque le dispositif fonctionne dans le sens de l'emmagasinage, transférer, en temps utile, les objets du tapis d'entrée sur le tapis d'accumulation, d'autres moyens étant prévus pour, lors du fonctionnement dans le sens de l'emmagasinage, détecter la présence d'un nombre prédéterminé d'objets sur le tapis d'accumulation et, lorsque ce nombre est atteint, commander simultanément l'entraînement du tapis d'accumulation, du tapis oscillant et de la bobine dans le sens de l'emmagasinage et sur une course correspondant à la longueur d'encombrement du nombre précité d'objets, d'autres moyens étant prévus pour, lors du fonctionnement dans le sens de la distribution, détecter, d'une part, l'absence, sur le tapis d'accumulation, d'objets à distribuer et commander, alors, le fonctionnement, dans le sens de la distribution, du tapis d'accumulation, du tapis oscillant et de la bobine de stockage associés et, d'autre part, la présence, sur ce tapis d'accumulation, d'un nombre prédéterminé d'objets et commander, alors, l'arrêt du tapis d'accumulation, du tapis oscillant et de la bobine de stockage associés, tandis que d'autres moyens encore sont prévus pour l'entraînement pas à pas du tapis d'entrée ou de sortie dans un sens ou dans l'autre selon que le dispositif fonctionne dans le sens de l'emmagasinage ou de la distribution, la longueur de chaque pas étant déterminée par celle des objets et leur écartement.

Ce dispositif peut donc servir aussi bien à l'emmagasinage d'objets qu'à leur distribution. Cependant, dans les ensembles de production importants possédant de nombreux dispositifs d'emmagasinage et de distribution, on peut prévoir que chaque dispositif est spécialisé pour une seule fonction et ne comporte, exclusivement, que les moyens propres à cette fonction, à savoir les moyens pour l'emmagasinage ou les moyens pour la distribution des objets.

Suivant une forme d'exécution simple de l'invention, les moyens pour transférer les objets du tapis d'entrée au tapis d'accumulation, lorsque le dispositif fonctionne dans le sens de l'emmagasinage des objets, sont constitués par un poussoir disposé du côté opposé au tapis d'accumulation par rapport au tapis d'entrée ou de sortie et dans l'axe du tapis d'accumulation, de manière à transférer sur ce dernier chaque objet se présentant en face de l'extrémité amont du tapis d'accumulation, poussoir auquel est associé un détecteur de présence situé au-dessus du tapis d'entrée et de sortie, entre la position en retrait du poussoir et l'extrémité amont du tapis d'accumulation, ce détecteur de présence ayant pour but de commander le fonctionnement de ce poussoir chaque fois qu'il détecte au-dessous de lui la présence d'un objet à emmagasiner.

Suivant une forme d'exécution préférée de ce dispositif, pour son fonctionnement dans le sens de l'emmagasinage, les moyens de détection d'un nombre prédéterminé d'objets sur le tapis d'accumulation sont constitués par deux détecteurs de présence situés au-dessus de ce tapis d'accumulation, l'un à son extrémité aval et l'autre à une distance en amont égale à celle occupée par le nombre prédéterminé d'objets disposés côte à côte. Ainsi, lorsque l'envoi simultané d'un signal par les deux détecteurs de présence indique que le nombre prédéterminé d'objets est atteint et il suffit donc d'utiliser la simultanéité de ces signaux pour commander l'entraînement, dans le sens de l'emmagasinage, du tapis d'accumulation, du tapis oscillant et de la bobine de stockage des objets pour une course correspondant à la longueur d'encombrement de ce nombre d'objets.

Pour son fonctionnement dans le sens de la distribution des objets stockés dans la bobine de stockage en service, il est prévu un guide latéral du tapis de sortie situé du côté opposé au tapis d'accumulation pour arrêter chaque objet poussé par ce dernier sur le tapis de sortie, et un poussoir de désengagement du premier objet stationné sur le tapis de sortie et appliqué contre ce guide-butée pour le libérer de toute contrainte et permettre son libre entraînement par le tapis de sortie.

Dans le cas où il est prévu deux bobines de stockage et leurs tapis associés, le poussoir de désengagement associé au tapis d'accumulation le plus près de l'extrémité sortie du tapis de sortie est porté par un support mobile permettant son escamotage lorsqu'il n'est pas en service.

Dans ce cas, il n'est prévu que deux détecteurs de présence au-dessus de chaque tapis d'accumulation, l'un situé au-dessus de l'emplacement sur le tapis de sortie du premier objet en appui contre le guide-butée et l'autre au-dessus de l'emplacement du dernier objet correspondant à un nombre prédéterminé, la simultanéité des signaux envoyés par ces deux détecteurs commandant l'arrêt du tapis oscillant et de la bobine associés tandis que l'absence de signaux émis par le détecteur de présence associé au poussoir de désengagement correspondant commande leur remise en route.

Dans le but de simplifier les moyens de synchronisation entre chaque bobine de stockage des objets et le tapis oscillant qui lui est associé, suivant une forme d'exécution intéressante de l'invention, il est prévu, entre la bobine de stockage du film et la bobine de stockage des objets sur laquelle est enroulé ce film ou de laquelle il est au contraire déroulé, deux rouleaux de détour contre lesquels passe le film et dont l'un est appliqué tangentiellement contre l'extrémité aval du tapis oscillant de manière à presser le film contre la bande de ce tapis et transmettre ainsi le mouvement du film à cette bande, de telle sorte que la vitesse du film et celle de la bande de ce tapis oscillant sont toujours rigoureusement égales.

Suivant une forme d'exécution perfectionnée de l'invention ayant pour but de permettre un fonctionnement ininterrompu de l'emmagasinage des objets malgré le changement des bobines d'emmagasinage, il est prévu, en association avec un seul tapis transporteur d'entrée ou de sortie, deux bobines d'emmagasinage des objets disposées coaxialement, à chacune desquelles est associée une bobine de stockage du film, deux tapis d'accumulation et deux tapis oscillants dont chacun est associé à l'un des tapis d'accumulation, une barrière amovible étant associée au tapis transporteur d'entrée ou de sortie, de manière à permettre, lorsque le dispositif fonctionne dans le sens correspondant à l'emmagasinage des objets et lorsqu'elle est en position active, d'arrêter ces derniers au droit du premier tapis d'accumulation tant que la bobine de stockage des objets lui correspondant n'est pas pleine, et de manière à permettre, lorsqu'elle est en position escamotée, l'acheminement des objets jusqu'au droit du second tapis d'accumulation.

Naturellement, un poussoir de transfert des objets depuis le tapis transporteur d'entrée ou de sortie sur l'un des tapis d'accumulation est associé à chacun de ces derniers. Dans ce dernier cas, les moyens d'entraînement en rotation des deux tapis d'accumulation peuvent être communs puisque l'entraînement du tapis d'accumulation non en service ne perturbe absolument pas le fonctionnement du dispositif.

Pour faciliter le retrait et la mise en place des bobines d'emmagasinage lors du remplacement de chacune d'elles par une suivante, suivant une forme d'exécution intéressante de l'invention, d'une part, le moyeu de chaque bobine présente un alésage et, d'autre part, ses moyens de support et d'entraînement en rotation sont constitués par deux bouts d'arbre d'extrémités coniques aptes à s'engager partiellement dans l'alésage précité, dont l'un est fixe axialement mais lié en rotation à un moteur d'entraînement, et dont l'autre est porté par la tige qui lui est coaxiale d'un vérin de serrage.

De toute façon, l'invention sera bien comprise à l'aide de la description qui suit, en référence au dessin schématique annexé représentant, à titre d'exemple non limitatif, une forme d'exécution de ce dispositif dans le cas où il comporte deux bobines d'emmagasinage et deux jeux d'éléments auxiliaires permettant un fonctionnement ininterrompu :

Figure 1 en est une vue en perspective illustrant le fonctionnement de ce dispositif dans le sens de l'emmagasinage des objets ;

Figure 2 est une vue similaire à figure 1 illustrant le fonctionnement de ce dispositif dans le sens de la distribution des objets.

Comme le montre le dessin, ce dispositif comprend deux bobines d'emmagasinage (2) disposées coaxialement mais dont une seule est visible sur le dessin, dont le moyeu présente un alésage (3) et dont chacune est supportée par deux bouts d'arbre coaxiaux et d'extrémités

6

coniques, respectivement (4) et (5). Le bout d'arbre (4), axialement fixe, est apte à être entraîné en rotation par un moteur (6) auquel il est lié en rotation par une courroie (7) et une poulie (8) portée par l'arbre du moteur (6). Le bout d'arbre (5) est porté par la tige (9a), qui lui est coaxiale et sur laquelle il est monté libre en rotation, d'un vérin (9). Les extrémités coniques des bouts d'arbre (4) et (5) ont des diamètres externes respectivement inférieur et supérieur à celui de l'alésage (3) du moyeu de la bobine (2), de manière à permettre à la fois le soutien et le bon serrage de cette bobine. Lors du retrait et de la mise en place d'une bobine (2) entre les bouts d'arbre (4) et (5) qui lui sont destinés, il suffit de déplacer le bout d'arbre (5) de manière à l'éloigner du bout d'arbre (4) jusqu'à une valeur d'écartement supérieure à la longueur de la bobine (2) et inversement.

Sur le dessin, pour plus de clarté, on a représenté une seule bobine (2) mais aussi un seul jeu de bouts d'arbre (4) et (5) et de vérin (9) et, plus précisément, celui correspondant à la bobine (2) non représentée.

A chaque bobine de stockage (2) est asssociée une bobine (11) de stockage d'un film ou ruban (12) en matière plastique ou autre, dont la largeur correspond sensiblement à la longueur des objets à emmagasiner dans les bobines (2) et par conséquent sa largeur est inférieure ou égale à l'écartement des flasques des bobines (2) entre lesquels ce film (12) est destiné à être enroulé ou d'entre lesquels il est destiné à être déroulé, selon que le dispositif fonctionne dans le sens de l'emmagasinage ou de la distribution. Entre sa bobine de stockage (11) et la bobine de stockage (2) correspondante, le film passe sur deux rouleaux de détour (13) et (14). Parallèlement à l'axe commun des bobines d'emmagasinage (2) et en avant d'elles, est placé un tapis transporteur d'entrée ou de sortie (15) apte à être entraîné pas à pas à l'aide d'un moteur électrique (16) auquel il est lié en rotation par l'intermédiaire d'une courroie (17) tendue entre une poulie (18) calée sur l'arbre du moteur (16) et une poulie (19) calée sur l'arbre de l'un (21) des rouleaux tendeurs du tapis (15). Ce tapis (15) est destiné à recevoir ou à évacuer les objets à emmagasiner sur les bobines (2) ou à distribuer à partir de ces bobines et qui, dans l'exemple illustré sur le dessin, sont constitués par des briquets (22).

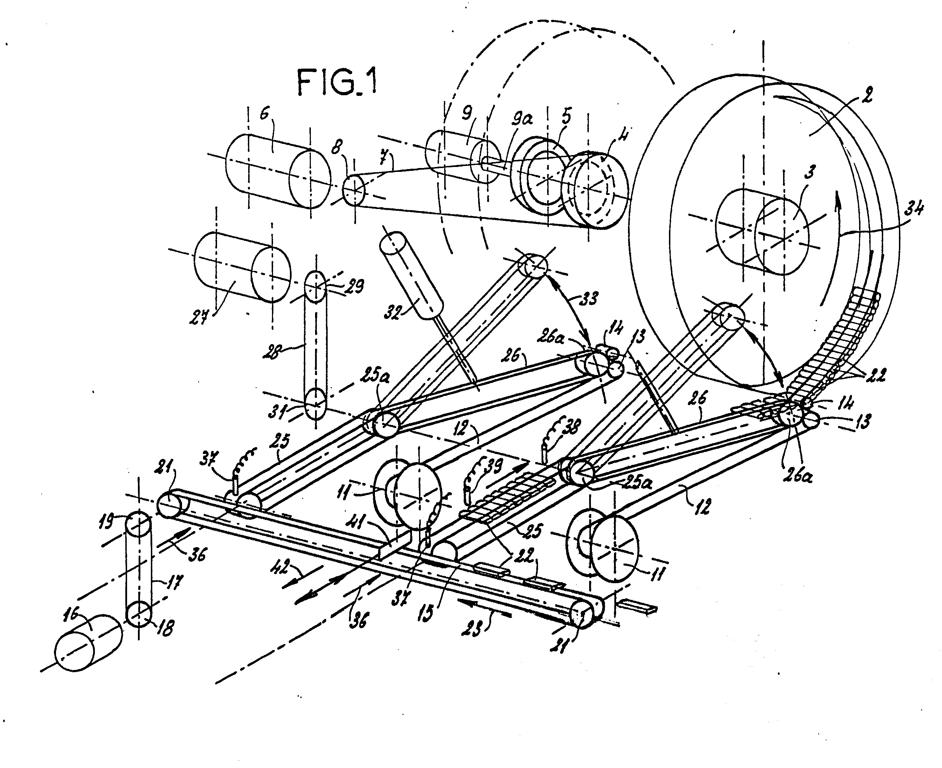

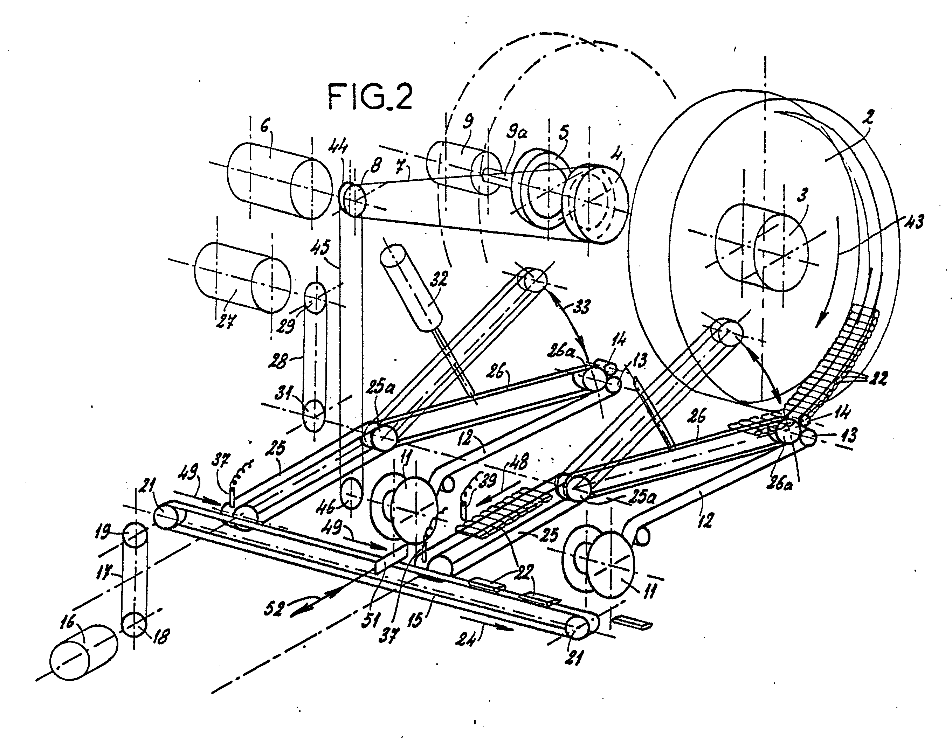

Dans le cas de l'emmagasinage des briquets (22) dans les bobines (2), le tapis transporteur (15) est entraîné pas à pas dans le sens de la flèche (23) [figure 1] et, dans le cas de la distribution des briquets (22), ce tapis transporteur (15) est entraîné pas à pas dans le sens de la flèche (24) [figure 2].

A chaque bobine de stockage (2) est associé un tapis d'accumulation (25) et un tapis oscillant (26) disposés dans le prolongement l'un de l'autre. Les deux tapis d'accumulation (25) sont disposés perpendiculairement à la direction générale du tapis transporteur d'entrée ou de sortie (15) et chacun d'eux est orienté en direction de la bobine (2) à laquelle il est associé. A ces deux tapis d'accumulation (25) est associé un moteur électrique d'entraînement (27) auquel ils sont liés en rotation par une courroie de transmission (28) tendue entre une poulie (29) calée sur l'arbre du moteur (27) et une poulie (31) calée sur l'arbre commun de l'un (25a) de leurs rouleaux tendeurs.

Chaque tapis oscillant (26) est articulé, par l'une de ses extrémités, sur l'axe du rouleau tendeur (25a) du tapis d'accumulation (25) correspondant le plus éloigné du tapis transporteur d'entrée ou de sortie (15).

En outre, à chacun des tapis oscillants (26) est associé un vérin pneumatique ou à ressort (32) tendant constamment à le faire pivoter dans le sens de la flèche (33) correspondant à l'application de son extrémité libre (26a), c'est-à-dire celle la plus éloignée du tapis d'accumulation (25), contre la dernière spire en formation de briquets emmagasinés (22) dans la bobine (2) associée.

Il faut noter en outre que le rouleau (13) contre lequel défile le film (12) de la bobine (11) associée est en contact tangentiel avec l'extrémité précitée (26a) du tapis oscillant (26) correspondant, ce qui fait que l'extrémité (26a) de chaque tapis (26) se trouve en appui tangentiel contre la dernière spire formée de la bobine (2) correspondante, juste en amont de la ligne de tangence du film (12) avec cette bobine (2) dans le sens de l'emmagasinage et, inversement, juste en aval de cette ligne de tangence dans le sens de la distribution des briquets (22). Il en découle aussi que l'entraînement de chaque tapis (26) résulte du mouvement du film (12) correspondant. Il faut noter en outre que, grâce à cette disposition, les vitesses linéaires du tapis (26) et du film (12) sont toujours égales et donc parfaitement synchronisées.

Dans l'exemple illustré sur la figure 1, seuls les organes nécessaires au fonctionnement du dispositif dans le sens de l'emmagasinage

8

des briquets (22) ont été représentés tandis que, dans l'exemple illustré sur la figure 2, seuls les organes nécessaires au fonctionnement du dispositif dans le sens de la distribution des briquets (22) ont été représentés. Ces deux représentations correspondent donc à une spécialisation du fonctionnement du dispositif, respectivement à l'emmagasinage des briquets (22) et à leur distribution.

Lorsque ce dispositif fonctionne dans le sens de l'emmagasinage des briquets (22) dans les bobines (2), il est nécessaire que ces dernières soient entraînées en rotation dans le sens de la flèche (34) et que les briquets (22) soient transférés du tapis d'entrée (15) sur l'un ou l'autre des tapis d'accumulation (25), alors qu'il est suffisant que les bobines (11) de stockage du film (12) soient freinées.

Le transfert des briquets (22) du tapis d'entrée (15) sur les tapis d'accumulation (25) est obtenu à l'aide de deux poussoirs symbolisés par les flèches (36) dont chacun est disposé perpendiculairement au tapis (15), du côté opposé au tapis d'accumulation (25) correspondant et dans l'axe de ce tapis (25). Pour que les briquets (22) soient stockés dans les bobines (2) sans perte de volume, il est nécessaire qu'ils soient disposés côte à côte en contact tangentiel et, pour cela, il est nécessaire que le fonctionnement des tapis d'accumulation (25) des tapis oscillants (26) et des bobines (2) soit périodique et ne soit commandé que lorsqu'un nombre prédéterminé de briquets (22) est accumulé sur le tapis d'accumulation (25) considéré. A cet effet, d'une part, à chacun des poussoirs (36) est associé un détecteur de présence (37) d'un briquet (22) signalant la présence d'un briquet (22) juste en amont du tapis d'accumulation (25) considéré et provoquant le fonctionnement du poussoir correspondant pour transférer ce briquet (22) du tapis (15) sur le tapis (25). A chacun des tapis d'accumulation (25) sont associés deux détecteurs de présence (38) et (39). Le détecteur aval (38) est placé à proximité de l'extrémité aval (25a) du tapis d'accumulation (25) correspondant et il a pour but de détecter la présence d'un briquet (22) au-dessous de lui. Le détecteur amont (39), qui a également pour but de détecter la présence d'un briquet (22) au-dessous de lui, est placé à une distance du détecteur (38) correspondant à la longueur d'encombrement du nombre déterminé de briquets (22) devant déclencher le fonctionnement du tapis (25), du tapis (26) et de la bobine (2) correspondante.

La présence des deux bobines (2) et de leurs accessoires de ce dispositif vise à permettre le fonctionnement en continu de l'alimentation en briquets (22), c'est-à-dire sans interruption lorsqu'une bobine de stockage est pleine. A cet effet, au tapis transporteur (15) est associée une barrière amovible (41) apte, lorsqu'elle est en position active comme illustré sur la figure 1, à arrêter les briquets (22) au droit du premier tapis d'accumulation (25). Dans cette position, la barrière (41) neutralise le second tapis d'accumulation, le second tapis oscillant (26) et la seconde bobine (2) qui, de ce fait, peut être remplacée par une bobine vide lorsqu'elle a été remplie. Inversement, lorsque la première bobine (2) est pleine, il suffit de déplacer la barrière (41), dans le sens de la flèche (42), pour l'amener en position escamotée et permettre l'entraînement des briquets jusqu'à une position située en face du second tapis d'accumulation (25). Naturellement, l'escamotage de la barrière (41) doit entraîner aussi la neutralisation du détecteur de présence (37) associé au premier poussoir (36) correspondant au premier tapis d'accumulation (25).

Comme indiqué précédemment, la figure 2 illustre le fonctionnement de ce dispositif dans le sens de la distribution des briquets (22) et, par conséquent, sur cette figure on a supprimé les accessoires inutiles du dispositif de figure 1 et on a, au contraire, représenté les accessoires indispensables au fonctionnement de ce dispositif dans ce sens, tout en conservant les accessoires communs.

Pour la distribution des briquets (22), les bobines (2) doivent être entraînées dans le sens de la flèche (43). C'est la raison pour laquelle, sur la figure 2, on a représenté à nouveau les bouts d'arbre (4) et (5), le vérin (9,9a), le moteur (6), la poulie (8) et la courroie de transmission (7) qui assure cet entraînement. Par ailleurs, les films (12) doivent être appelés par leur bobine respective (11) et, pour cette raison, l'arbre de sortie du moteur (6) porte une seconde poulie (44) reliée, par une courroie de transmission (45) reliée à une poulie (46) calée sur l'arbre commun (47) des bobines (11). Comme dans l'exemple illustré par la figure 1, le film (12) assure l'entraînement en synchronisme du tapis oscillant (26) associé, tandis que l'entraînement des bobines (2) et (11) à partir du même moteur (6) assure quant à lui la synchronisation de leurs vitesses respectives.

Dans ce cas de figure, le tapis (15), qui joue alors le rôle de tapis de sortie, est entraîné dans le sens de la flèche (24) et il lui est associé un guide latéral situé du côté opposé au tapis d'accumulation (25) pour assurer l'arrêt et le guidage des briquets (22). Cependant la pression exercée sur le premier briquet (22) déposé sur le tapis (15) par les autres briquets (22) entreposés encore sur le tapis (25), lui-même entraîné dans le sens de la flèche (48), s'oppose à l'entraînement de ce premier briquet (22) par le tapis de sortie (15). Pour remédier à cet inconvénient, en face de chaque tapis d'accumulation (25), est associé au tapis de sortie (15) un poussoir (49) permettant le dégagement du premier briquet (22) par rapport à ceux restant encore sur le tapis d'accumulation (25), et son libre entraînement ultérieur par le tapis (15). Naturellement, la présence du poussoir (49) correspondant au premier tapis d'accumulation (25), c'est-à-dire celui situé à droite sur la figure 2, serait gênante lorsque la distribution des briquets (22) se fait à partir du second tapis (25), c'est-à-dire celui situé à gauche sur la figure 2, pendant le changement de la première bobine (2) préalablement vidée. A cet effet, le poussoir (49) précité est porté par un support (51) susceptible d'être déplacé dans le sens de la double flèche (52) et, par conséquent, d'être amené en position escamotée, comme c'était le cas pour la barrière (41) du dispositif de figure 1.

Le fonctionnement de chaque poussoir (49) est commandé par le détecteur de présence (37) qui émet un signal chaque fois qu'un briquet est en appui contre le guide-butée.

Un autre détecteur de présence, par exemple le détecteur (39), est disposé au-dessus de l'emplacement occupé par un briquet lorsque le nombre prédéterminé de briquets est atteint à partir du premier briquet précité et la simultanéité des signaux de ces deux détecteurs (37) et (39) commande l'arrêt du fonctionnement du tapis oscillant (25) et de la bobine (2) associés tandis que l'absence de signaux de la part du détecteur (37) associé au poussoir (49) en commande la remise en route.

Naturellement, chacun des dispositifs tels qu'illustrés sur les figures 1 et 2 pourrait être équipé de tous les accessoires nécessaires à son fonctionnement dans un sens ou dans l'autre et permettre ainsi d'utiliser un même dispositif aussi bien pour le stockage des objets que pour leur distribution.

11

## - REVENDICATIONS -

1.- Procédé pour le stockage, le transfert et la distribution d'objets, caractérisé en ce qu'il consiste, pour leur stockage, à emmagasiner les objets (22), disposés côte à côte, entre les spires d'un film ou ruban (12) de matière souple, au fur et à mesure de son enroulement sur une bobine de stockage (2) et, pour leur redistribution, à les extraire d'entre les spires de ce film (12), en le déroulant de cette bobine (2).

2.- Dispositif pour la mise en oeuvre du procédé selon la revendication 1, caractérisé en ce qu'il comprend essentiellement au moins une bobine de stockage (2) d'axe de rotation horizontal et à laquelle sont associés des moyens (9) d'entraînement en rotation dans les deux sens, c'est-à-dire pour le fonctionnement dans le sens de l'emmagasinage aussi bien que pour celui dans le sens de la distribution, et des moyens de freinage, l'écartement des flasques de cette bobine (2) correspondant sensiblement à la longueur des objets (22) à stocker, au moins une bobine (11) de stockage du film (12) à laquelle sont associés des moyens de freinage pour le fonctionnement dans le sens de l'emmagasinage et des moyens d'entraînement en rotation (6,44,45,46) dans le sens d'appel du film (12) pour le fonctionnement dans le sens de la distribution, un tapis transporteur (15) d'entrée des objets (22) à stocker ou de sortie des objets (22) à distribuer, au moins un tapis d'accumulation (25) orienté perpendiculairement au tapis d'entrée ou de sortie (15) des objets (22), un tapis oscillant (26) disposé dans le prolongement de chaque tapis d'accumulation (25), monté oscillant autour de son extrémité située du côté du tapis d'accumulation et auquel sont associés des moyens (32) tendant à maintenir élastiquement son autre extrémité (26a) en appui tangentiel contre la spire de plus grand diamètre formée dans la bobine de stockage (2) juste en amont de la zone d'appui tangentiel du film (12) contre ladite dernière spire, des moyens (36,37) étant prévus pour, lorsque le dispositif fonctionne dans le sens de l'emmagasinage, transférer, en temps utile, les objets (22) du tapis d'entrée (15) sur le tapis d'accumulation (25), d'autres moyens (38,39) étant prévus pour, lors du fonctionnement dans le sens de l'emmagasinage, détecter la présence d'un nombre prédéterminé d'objets (22) sur le tapis d'accumulation (25) et, lorsque ce nombre est atteint, commander simultanément l'entraînement du tapis d'accumulation (25), du tapis oscillant (26) et de la bobine (2) dans le sens de l'emmagasinage et sur une course correspondant à la longueur d'encombrement du nombre précité d'objets (22), d'autres moyens (37,39) étant prévus pour, lors du fonctionnement dans le sens de la distribution, détecter, d'une part, l'absence, sur le tapis d'accumulation (25), d'objets (22) à distribuer et commander, alors, le fonctionnement, dans le sens de la distribution, du tapis d'accumulation (25), du tapis oscillant (26) et de la bobine de stockage (2) associés et, d'autre part, la présence, sur ce tapis d'accumulation (25), d'un nombre prédéterminé d'objets (22) et commander, alors, l'arrêt du tapis d'accumulation (25), du tapis oscillant (26) et de la bobine de stockage (2) associés, tandis que d'autres moyens encore (16,17,18,19) sont prévus pour l'entraînement pas à pas du tapis (15) d'entrée ou de sortie dans un sens ou dans l'autre selon que le dispositif fonctionne dans le sens de l'emmagasinage ou de la distribution, la longueur de chaque pas étant déterminée par celle des objets (22).

3.- Dispositif pour le stockage d'objets selon le procédé de la revendication 1, caractérisé en ce qu'il comprend exclusivement les moyens pour l'emmagasinage de ces objets, c'est-à-dire au moins une bobine de stockage (2) d'axe horizontal et à laquelle sont associés des moyens (9) d'entraînement en rotation dans le sens de l'emmagasinage, et des moyens de freinage, l'écartement des flasques de cette bobine (2) correspondant sensiblement à la longueur des objets (22) à stocker, au moins une bobine (11) de stockage du film (12) à laquelle sont associés des moyens de freinage, un tapis transporteur (15) d'entrée des objets (22) à stocker, au moins un tapis d'accumulation (25) orienté perpendiculairement au tapis d'entrée (15) des objets (22), un tapis oscillant (26) disposé en aval et dans le prolongement de chaque tapis d'accumulation (25), monté oscillant autour de son extrémité située du côté du tapis d'accumulation et auquel sont associés des moyens (32) tendant à maintenir élastiquement son autre extrémité (26a) en appui tangentiel contre la spire de plus grand diamètre formée dans la bobine de stockage (2) juste en amont de la zone d'appui tangentiel du film (12) contre ladite dernière spire, des moyens (36,37) étant prévus pour transférer, en temps utile, les objets (22) du tapis d'entrée (15) sur le tapis d'accumulation (25), d'autres moyens (38,39) étant prévus pour détecter la présence d'un nombre prédéterminé d'objets (22) sur le tapis d'accumulation (25) et, lorsque ce nombre est atteint, commander simultanément l'entraînement du tapis d'accumulation (25), du tapis oscillant (26) et de la bobine (2) jusqu'à emmagasinage, dans la bobine, du nombre précité d'objets (22), tandis que d'autres moyens (16,17,18,19) sont prévus pour l'entraînement pas à pas du tapis (15) d'entrée dans le sens de l'amenée des objets (22), la longueur de chaque pas étant déterminée par celle des objets (22) et leur écartement.

4.- Dispositif pour la distribution d'objets selon le procédé de la revendication 1, caractérisé en ce qu'il comprend exclusivement les moyens pour la distribution de ces objets, c'est-à-dire au moins une bobine de stockage (2), d'axe horizontal, et à laquelle sont associés des moyens (9) d'entraînement en rotation dans le sens de la distribution, et des moyens de freinage, l'écartement des flasques de cette bobine (2) correspondant sensiblement à la longueur des objets (22) à stocker, au moins une bobine (11) de stockage du film (12) à laquelle sont associés des moyens de freinage et des moyens d'entraînement en rotation (6,44, 45,46) dans le sens d'appel du film (12), un tapis transporteur (15) de sortie des objets (22) à distribuer, au moins un tapis d'accumulation (25) orienté perpendiculairement au tapis d'entrée ou de sortie (15) des objets (22), un tapis oscillant (26) disposé en amont et dans le prolongement de chaque tapis d'accumulation (25), monté oscillant autour de son extrémité située du côté du tapis d'accumulation et auquel sont associés des moyens (32) tendant à maintenir élastiquement son autre extrémité (26a) en appui tangentiel contre la spire de plus grand diamètre encore formée dans la bobine de stockage (2) juste en amont de la zone d'appui tangentiel du film (12) contre ladite dernière spire, des moyens (37,39) étant prévus pour détecter, d'une part, l'absence, sur le tapis d'accumulation (25), d'objets (22) à distribuer et commander alors le fonctionnement, dans le sens de la distribution, du tapis d'accumulation (25), du tapis oscillant (26) et de la bobine de stockage (2) associés et, d'autre part, la présence, sur ce tapis d'accumulation (25), d'un nombre prédéterminé d'objets (22) et commander, alors, l'arrêt du tapis d'accumulation (25), du tapis oscillant (26) et de la bobine de stockage (2) associés, tandis que d'autres moyens encore (16,17,18,19) sont prévus pour l'entraînement pas à pas du tapis (15) de sortie dans le sens de la distribution, la longueur de chaque pas étant déterminée par celle des objets (22) et leur écartement.

5.- Dispositif selon les revendications 2 et 3, caractérisé en ce que les moyens pour transférer les objets (22) du tapis d'entrée (15) au tapis d'accumulation (25), lorsque le dispositif fonctionne dans le sens de l'emmagasinage des objets (22), sont constitués par un poussoir (36) disposé du côté opposé au tapis d'accumulation (25) par rapport au tapis (15) d'entrée ou de sortie et dans l'axe du tapis d'accumulation (25), de manière à transférer sur ce dernier chaque objet (22) se présentant en face de l'extrémité amont du tapis d'accumulation (25), poussoir (36) auquel est associé un détecteur de présence (37) situé au-dessus du tapis (15) d'entrée et de sortie, entre la position en retrait du poussoir (36) et l'extrémité amont du tapis d'accumulation (25), ce détecteur de présence (37) ayant pour but de commander le fonctionnement de ce poussoir (36) chaque fois qu'il détecte, au-dessous de lui, la présence d'un objet (22) à emmagasiner.

6.- Dispositif selon l'une des revendications 2, 3 ou 5, caractérisé en ce que les moyens de détection d'un nombre prédéterminé d'objets (22) sur le tapis d'accumulation (25) sont constitués par deux détecteurs de présence (38,39) situés au-dessus de ce tapis d'accumulation (25), l'un à son extrémité aval (25a) et l'autre à une distance en amont égale à celle occupée par le nombre prédéterminé d'objets (22) disposés côte à côte, ces deux détecteurs (38,39) étant associés aux moyens d'entraînement (27,28) des tapis d'accumulation (25) et oscillant (26) et de la bobine de stockage (2) associés lorsqu'ils émettent des signaux simultanés, et pour une course correspondant à l'encombrement en longueur du nombre prédéterminé d'objets (22) à emmagasiner.

7.- Dispositif selon la revendication 2 ou 4, caractérisé en ce que, pour son fonctionnement dans le sens de la distribution, il comprend un guide latéral du tapis de sortie (15) situé du côté opposé au tapis d'accumulation (25) pour arrêter chaque objet (22) poussé par ce dernier sur le tapis de sortie (15) et un poussoir (49) de désengagement du premier objet (22) stationné sur le tapis de sortie (15) et appliqué contre ce guide-butée pour le libérer de toute contrainte et permettre son libre entraînement par le tapis de sortie (15), un détecteur de présence (37) étant associé à ce poussoir de désengagement (49).

8.- Dispositif selon la revendication 7, caractérisé en ce que, dans le cas où il est prévu deux bobines de stockage (2) et leurs tapis associés (25,26), le poussoir de désengagement (49) associé au tapis d'accumulation (25) le plus près de l'extrémité sortie du tapis de sortie (15) est porté par un support mobile permettant son escamotage lorsqu'il n'est pas en service.

9.- Dispositif selon l'ensemble des revendications 4, 7 et 8, caractérisé en ce qu'il n'est prévu que deux détecteurs de présence (37,39) au-dessus de chaque tapis d'accumulation (25), l'un situé au-dessus de l'emplacement, sur le tapis de sortie (15), du premier objet (22) en appui contre le guide-butée et l'autre au-dessus de l'emplacement du dernier objet correspondant à un nombre prédéterminé, la simultanéité des signaux envoyés par ces deux détecteurs (37,39) commandant l'arrêt du tapis oscillant (26) et de la bobine de stockage (2) associés tandis que l'absence de signaux émis par le détecteur de présence (37) associé au poussoir de désengagement (49) correspondant commande leur remise en route.

10.- Dispositif selon l'une quelconque des revendications 2 à 9, caractérisé en ce qu'il est prévu, entre la bobine de stockage (11) du film (12) et la bobine de stockage (2) des objets (22) sur laquelle est enroulé ce film (12) ou de laquelle il est au contraire déroulé, deux rouleaux de détour (13,14) contre lesquels passe le film (12) et dont l'un (13) est appliqué tangentiellement contre l'extrémité aval (26a) du tapis oscillant (26) de manière à presser le film (12) contre la bande de ce tapis (26) et transmettre ainsi le mouvement du film (12) à cette bande.

11.- Dispositif selon l'une quelconque des revendications 2 à 10, caractérisé en ce qu'il est prévu, en association avec un seul tapis transporteur (15) d'entrée ou de sortie, deux bobines (2) de stockage des objets (22) disposées coaxialement, à chacune desquelles est associée une bobine (11) de stockage du film (12), un tapis d'accumulation (25) et un tapis oscillant (26), un support amovible (41) étant associé au tapis transporteur (15) d'entrée ou de sortie pour, lorsque le dispositif fonctionne dans le sens de l'emmagasinage des objets (22), et lorsqu'il est en position active, servir de barrière et permettre l'arrêt de ces objets au droit du premier tapis d'accumulation (25) tant que la bobine de stockage (2) des objets (22) lui correspondant n'est pas pleine, et, lorsqu'il est en position escamotée, permettre l'acheminement des objets (22) jusqu'au droit du second tapis d'accumulation, un poussoir (36) étant associé à chaque tapis d'accumulation (25) pour le transfert des objets (22) depuis le tapis transporteur (15) d'entrée ou de sortie sur le tapis d'accumulation, ce support amovible (41) supportant, pour

16

le fonctionnement dans le sens de la distribution, un poussoir de désengagement (49) escamotable lorsqu'il n'est pas en service.

12.- Dispositif selon la revendication 11, caractérisé en ce que les moyens d'entraînement en rotation (27,28,29,31) des deux tapis d'accumulation (25) sont communs.

13.- Dispositif selon l'une quelconque des revendications 2 à 12, caractérisé en ce que, d'une part, le moyeu (3) de chaque bobine (2) présente un alésage et, d'autre part, ses moyens de support et d'entraînement en rotation sont constitués par deux bouts d'arbre (4,5) d'extrémités coniques aptes à s'engager partiellement dans l'alésage (3) précité, dont l'un (4) est fixe axialement mais lié en rotation à un moteur d'entraînement (6), et dont l'autre (5) est porté par la tige (9a) qui lui est coaxiale d'un vérin de serrage (9).

FIG.1

0190531

FIG.2

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| X | EP-A-0 079 425  (KLINGENBERG) <br> * Page  6, revendication 1; figures * | 1 | **B 65 G    47/51** |
| A | | 2-4 | |
| X | GB-A-2 091 198  (PAYNE) <br> * Page  1,  ligne  126 - page 2, ligne  49; page 13, lignes 46-68; figures * | 1 | |
| A | | 2-4,8, 11,12 | |

**DOMAINES TECHNIQUES RECHERCHES (Int. Cl.4)**

B 65 G
A 24 C

Le présent rapport de recherche a été établi pour toutes les revendications

| Lieu de la recherche | Date d'achèvement de la recherche | Examinateur |
|---|---|---|
| LA HAYE | 16-04-1986 | OSTYN T.J.M. |